# EUROPEAN PATENT SPECIFICATION

(11) **EP 3 952 518 B1**
(45) Date of publication and mention of the grant of the patent: **11.09.2024**
(21) Application number: 20189860.8
(22) Date of filing: 06.08.2020
(51) Int. Cl.: H04W 72/04, H04W 72/23, H04L 5/00

(54) **CONTROL CHANNEL REPETITION WITH MAPPING SCHEME**
STEUERKANALWIEDERHOLUNG MIT ABBILDUNGSSCHEMA
RÉPÉTITION DE CANAL DE CONTRÔLE AVEC SCHÉMA DE MAPPAGE

(43) Date of publication of application: 09.02.2022
(73) Proprietor: Nokia Technologies Oy, 02610 Espoo (FI)
(72) Inventor: Hakola, Sami-Jukka, 90450 Kempele (FI); Laddu, Keeth Saliya Jayasinghe, 2140 Espoo (FI)
(74) Representative: Nokia EPO representatives

(56) References cited:
- WO-A1-2019/244223
- WO-A1-2020/032691
- US-A1- 2019 297 603
- US-A1- 2020 106 559
- US-A1- 2020 221 485

## Description

### TECHNOLOGICAL FIELD

The disclosure is related to communication networks, such as wireless radio networks comprising base stations and user equipment communicating with each other. More specifically, the disclosure pertains to the physical layer design and in particular to an improved transmission of control data over a control channel, e.g. for scheduling resources on a shared channel.

### BACKGROUND

The present disclosure is related but not limited to the physical layer design of the 3GPP New Radio (NR), also termed 5G communication network.

In radio networks, such as the 5G network, control data of a control channels (such as the physical downlink control channel, PDCCH, of a 4G or 5G communication network) is transmitted using specifically configured time and frequency resources, which may be defined by the control region in 4G systems or by a so called "control resource set" (CORESET) in 5G systems. Typically, a search space set is associated to the CORESET and defines when (time domain monitoring occasions) and how (aggregation levels) a user equipment (UE) may detect control data of a control channel (such as the PDCCH) in the resourced defined by the CORESET.

The CORESET may be configured for one or multiple so called "transmission configuration indicator" (TCI) states. From these states the base station (BS) can activate one at a time. The activation of a TCI state may be realized using a medium access control (MAC) control element (CE) activation command. The TCI state may comprise quasi co-located (QCL) source reference signals (RSs). There are different kinds of QCL types, which the TCI state can indicate. One QCL type is QCL-TypeD indicating the UE how to setup its receive (RX) beam in order to be able to receive the control data on the control channel. In other words, the UE would use the same or similar RX beam for the PDCCH reception as it uses to receive the given QCL-Type D source RS.

Basically, the UE can be configured with multiple CORESETS, e.g. with up to three CORESETs or with up to five CORESETs. However, in any case still only a single TCI state can be active at a time.

It is of interest to improve the reliability and robustness for control channels, specifically in multi-TPR (multi Transmission Reception Points), multi-panel and/or multi-beam communication systems. Prior art document US2020106559A1 relates to retransmission schemes for control, e.g. PDCCH repetitions, and data, e.g. PUSCH repetitions, that employ multiple diversity domains.

### SUMMARY OF SOME EXEMPLARY EMBODIMENTS

The invention is defined by the subject-matter of the claims.

According to a first exemplary aspect, an apparatus is disclosed comprising means for:
- obtaining a resource configuration for a control channel carrying control data,
- obtaining information indicating a transmission period for a repeated transmission of said control data on said control channel;
- obtaining transmission configuration data defining one or more transmission states for said resource configuration;
- obtaining monitoring information indicating one or more monitoring occasions associated with said resource configuration;
- monitoring said control channel for control data on said monitoring occasions by using a mapping scheme between at least one of said one or more transmission states and said monitoring occasions within said transmission period.

According to the first exemplary aspect, a method is also disclosed, performed by at least one apparatus, the method comprising:
- obtaining a resource configuration for a control channel carrying control data,
- obtaining information indicating a transmission period for a repeated transmission of said control data on said control channel;
- obtaining transmission configuration data defining one or more transmission states for said resource configuration;
- obtaining monitoring information indicating one or more monitoring occasions associated with said resource configuration;
- monitoring said control channel for control data on said monitoring occasions by using a mapping scheme between at least one of said one or more transmission states and said monitoring occasions within said transmission period.

According to a second exemplary aspect an apparatus is disclosed comprising means for:
- providing a resource configuration for a control channel carrying control data,
- providing information indicating a transmission period for a repeated transmission of said control data on said control channel;
- providing transmission configuration data defining one or more transmission states for said resource configuration;
- providing monitoring information indicating one or more monitoring occasions associated with said resource configuration;
- sending control data over said control channel on said monitoring occasions by using a mapping scheme between at least one of said one or more transmission states and said monitoring occasions within said transmission period.

According to the second exemplary aspect, a method is also disclosed, performed by at least one apparatus, the method comprising:
- providing a resource configuration for a control channel carrying control data,
- providing information indicating a transmission period for a repeated transmission of said control data on said control channel;
- providing transmission configuration data defining one or more transmission states for said resource configuration;
- providing monitoring information indicating one or more monitoring occasions associated with said resource configuration;
- sending control data over said control channel on said monitoring occasions by using a mapping scheme between at least one of said one or more transmission states and said monitoring occasions within said transmission period.

In the following, further exemplary features and exemplary embodiments of the different aspects of the present disclosure will be described in more detail.

The apparatus of the first exemplary aspect may be an electronic device, such as a user equipment. The apparatus may in particular be a stationary device, such as a desktop computer or a mobile device, such as a smart phone, a tablet, a wearable, a smartwatch or the like. A user equipment may be understood as any device used directly by an end-user to communicate with a network. The information obtained by the apparatus of the first exemplary aspect may be obtained from the apparatus of the second exemplary aspect (e.g. a base station).

The apparatus of the second exemplary aspect may be an electronic device, such as a base station. As such, the apparatus may in particular be a stationary device. Multiple apparatuses of the second exemplary aspect may in particular establish a communication system or network, which may in particular be a New Radio (NR) or 5G system or any other mobile communications system defined by a future standards, in particular successors of the present 3GPP standards. The information provided by the apparatus of the second exemplary aspect may be provided to the apparatus of the first exemplary aspect (e.g. a UE).

The means of any of the disclosed apparatuses can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

Thus, according to a respective exemplary aspect of the present disclosure, there is also disclosed an apparatus comprising at least one processor and at least one memory including computer program code, the at least one memory and the computer program code configured to, with the at least one processor, cause an apparatus at least to perform and/or to control the method according to a respective exemplary aspect of the present disclosure.

Any of the above-disclosed apparatuses may be a module or a component for a device, for example a chip. The disclosed apparatus may comprise the disclosed components, for instance means, processor, memory, or may further comprise one or more additional components.

The method of a respective aspect may for instance be performed and/or controlled by the apparatus according to the respective aspect, for instance by a user equipment or base station, respectively. Generally, however, a respective method may also be performed and/or controlled by more than one apparatus, for instance by a user equipment and a network.

According to the first and second exemplary aspect of the present disclosure, there is in each case also disclosed a computer program, the computer program when executed by a processor of an apparatus causing said apparatus to perform a method according to the first and second aspect respectively.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

There is also disclosed a system comprising an apparatus of the first aspect (e.g. user equipment) and an apparatus of the second aspect (e.g. base station) working together for performing aspects of the disclose.

A resource configuration may in particular be understood to be or comprise a set of resources and/or parameters, for instance a set of physical resources (e.g. a specific area on a Resource Grid, such as the NR Downlink Resource Grid) and a set of parameters that is used to carry control data over a control channel. As will be explained in more detail below a resource configuration may in particular be a so called "control resource set" (CORESET). The resource configuration may in particular comprise the information indicating a transmission period and/or the transmission configuration data.

A control channel is in particular understood to be a physical channel carrying control data, such as the physical downlink control channel (PDCCH) carrying downlink control information (DCI) or the physical uplink control channel (PUCCH) carrying uplink control information (UCI).

As will be explained in more detail below, a transmission period is in particular understood to be a length or size in the time domain, within which a repeated transmission of control data is performed. Accordingly, the information indicating the transmission period indicates the length or size of transmission period. For instance, the information indicating the transmission period may define a certain number of resource units in the time domain. For instance, the transmission period may be a certain number of slots, sub-frames or frames (such as 1 slot, 2 slots, 3 slots etc.). The transmission may also be understood as a cycle, within which a repeated transmission of the control data on the control channel is performed.

The transmission period may be a parameter specifically used for indicating the period or cycle length used for control channel repetitions and used in a mapping scheme as described herein. The transmission period may also be referred to as "mini-period" in the present disclosure.

The transmission configuration data defines (e.g. implicitly or explicitly) one or more transmission states. A transmission state may in particular be a transmission configuration indicator (TCI) state. A specific transmission state may in particular instruct the apparatus how to configure certain receiver parameters in order to receive control data on the control channel.

For instance, a list of transmission configuration indicator (TCI) states may be received for dynamically indicating (e.g. over DCI) a transmission configuration. For instance, the transmission configuration may include one or more quasi co-location (QCL) relationships, e.g. between one or two downlink reference signals and physical layer reference signal ports, e.g. DM-RS port(s) of the PDSCH, DM-RS port(s) of PDCCH or the CSI-RS port(s) of a CSI-RS resource. Generally two antenna ports are said to be quasi co-located if properties of the channel over which a symbol on one antenna port is conveyed can be inferred from the channel over which a symbol on the other antenna port is conveyed. For instance, the UE can be configured with a list of up to a certain number of TCI state configurations (e.g. depending on UE capability) within a higher layer (e.g. RRC) parameter.

As will be explained further below, only a part of the transmission states may be activated and thus used by the apparatus.

Monitoring information, which indicates monitoring occasions associated with said resource configuration, may in particular be a search space set or information configuring or defining such a search space set. The monitoring information may be specific to the resource configuration and may in particular be provided by or part of the resource configuration. The search space may be a common search space or specific to a user equipment, for instance. In other words, a search space may be understood as an area within a CORESET that the UE should monitor to detect a specific control channel or control data (e.g. PDCCH/DCI).

However, the monitoring information (such as a search space set) does not necessarily need to define all possible monitoring occasions for the resource configuration used for monitoring the control channel. In an example, further monitoring occasions may be defined in other ways. For instance, while the monitoring information may define at least one monitoring occasion, one or more further monitoring occasions (which may in particular be considered as a repeated monitoring occasion or a copy or clone of the (original) monitoring occasion defined by the monitoring information) may then be defined in other ways e.g. by other information or configuration data (such as the resource configuration), as will be explained in more detail below.

It is now suggested to monitor said control channel for control data on said monitoring occasions by using a mapping scheme between at least one of said one or more transmission states and said monitoring occasions within said transmission period. Thus, for each of the monitoring occasions within the transmission period a specific transmission state is used as it is prescribed by the mapping scheme. For instance, the apparatus configures its receive beam for a respective monitoring occasion as prescribed by the mapping scheme.

The mapping scheme may in particular have any form and may be realized by any mapping of transmission states to monitoring occasions. The mapping scheme is preferably predefined and thus known to the UE and the base station. Alternatively, the mapping scheme may also be dynamically signaled (e.g. via a higher layer signal), for instance. The mapping scheme is such that for every monitoring occasion within a respective transmission period a transmission state is defined.

As an example, there may be m (active) transmission states and there may be *n* monitoring occasions within a transmission period. In case *n* is equal to *m,* the m transmission states may be mapped in one-on-one manner on the *n* monitoring occasions within a transmission period. In case *n* is smaller than *m*, only *n* (e.g. the first n) of the transmission states may be mapped on the *n* monitoring occasions within a transmission period. In case *n* is greater than *m,* the m transmission states may be repeatedly mapped on the *n* monitoring occasions within a transmission period (e.g. by repeatedly cycling through the *m* transmission states until no monitoring occasion is left).

The approach described above has various advantages over alternative approaches.

Specifically, the described approach has the advantage of not only enabling control channel (e.g. PDCCH) repetition but also diversity (e.g. hopping or cycling) with respect to transmission parameters (such as frequency and/or beam) for such repetitions. A control channel repetition may be required e.g. because the control information has been received with errors or has not been received at all when transmitted the first time. In particular the described approach with the specific mapping scheme allows the UE to use different transmission states and allows a UE to determine which transmission state to use for a specific monitoring occasion, also in case a previous transmission may have been missed. Moreover, receiving the same payload enables the UE also to perform soft-combining of different repetitions to improve reception performance. In an example, for alleviating soft-combining burden, one or more randomizations, e.g. the aggregation level and/or other randomizations in the PDCCH transmission the UE needs to estimate, may be reduced within the repetitions. In other words, in this way, there a reduction in the number of estimates the UE needs to process when combining multiple possible repetitions may be reduced. For instance, in an example, one or more randomizations, when the base station generates the PDCCH (note, that there could be control information to multiple UEs in one PDCCH) could be fixed among these repetitions.

Specifically, the described approach is also advantageous compared to an approach of simply activating more than one transmission states for the resource configuration at a time, e.g. two or four, which would cause the question which transmission state the UE would assume for the resource configuration on a certain monitoring occasion defined by the search space set. Rather the suggested approach described above allows the UE to determine which transmission state to use at all times.

Also, the suggested approach described above allows a UE to decode the control channel independent of which particular instance of a transmission/repetition is detected (e.g. in case the UE has missed one or more earlier transmissions/repetitions of the same control), because the transmission state (and thus the RX beam assumption at a UE) is not based on the specific repetition currently being transmitted, but rather the on the monitoring occasion.

The described approach is also advantageous compared to an approach, in which the monitoring information (such as the search space set) may be associated to a certain active transmission state (such as a certain active TCI state), as this would require deviating from the principle that the transmission state is a resource configuration (e.g. CORESET) parameter (and not e.g. search space set specific). Also, this would prevent having multiple search space sets having parallel monitoring occasions, or at least would require specific attention that the at certain time a UE may be able to receive using one receive beam only. That would complicate the solution where a transmission state would be search space set specific. As a result, this would not be considered a feasible option.

Another alternative approach would be that the activated transmission states are transmitted in round robin style, i.e. continuously cycled over the transmission states activated for the resource configuration and transmitted one at a time. However, the UE would directly get out of sync if it missed one transmission. In contrast, in the presented approach, the mapping of the transmission states is confined to a transmission period and e.g. repeated anew each transmission period, irrespective of any previous misses.

In an example, the resource configuration is or comprises a control resource set, CORESET. As already explained, a CORESET can be understood as a set of physical resources (e.g. a specific area on a New Radio Downlink Resource Grid) and a set of parameters that is used to carry control data over a control channel. For instance, in LTE, control channels are allocated across the entire system bandwidth in a control region. This makes it difficult to control the inter-cell interference. To address this, in a NR or 5G communication system, control data of a control channel is transmitted by means of a specifically designed CORESET. For instance, in the time domain, a CORESET configuration may span 1 to 3 consecutive OFDM symbols. Resource elements (RE) in a CORESET can be organized in RE Groups (REGs), each REG consisting of 12 REs of one OFDM symbol in one resource block (RB). An RRC signaling may for instance define parameters such as the number of RBs in the frequency domain in a CORESET, the number of symbols in the time domain in a CORESET, the number of REGs in a CORESET and/or the REG bundle size.

In the present approach, the resource configuration (and thus the CORESET) may in particular comprise information indicating that control channel (e.g. PDCCH) repetition is used. Further, in the present case, the resource configuration may in particular comprise the information indicating a transmission period, such as information indicating the size or length of the transmission period. Further, in the present case, the resource configuration may in particular comprise the transmission configuration data defining one or more transmission states for said resource configuration (e.g. a TCI state configuration).

In an example the control channel is or comprises a physical downlink control channel, PDCCH. PDCCH is in particular understood to be a physical channel that carries downlink control information (DCI).

Accordingly, in an example, the control data is or comprises downlink control information, DCI. Examples of LTE DCI formats are DCI-0, DCI-1, DCI-1A, DCI-1B, DCI-1C, DCI-1D, DCI-2,DCI-2A, DCI-3 and DCI-3A. Examples of 5G DCI formats are format 0_0 (Scheduling of PUSCH in one cell), format 0_1 (scheduling of PUSCH in one cell), format 1_0 (scheduling of PDSCH in one cell), format 1_1 (scheduling of PDSCH in one cell), format 2_0 (notifying a group of UEs of the slot format), format 2_1 (notifying a group of UEs of the PRB(s) and OFDM symbol(s) where UE may assume no transmission is intended for the UE), format 2_2 (transmission of TPC commands for PUCCH and PUSCH), format 2_3 (transmission of a group of TPC commands for SRS transmissions by one or more UEs).

In an example the control channel may also be or comprise a physical uplink control channel, PUCCH. PUCCH is in particular understood to be a physical channel that carries uplink control information (UCI).

In an example the control data schedules a transmission of a shared channel, such as a physical downlink shared channel (PDSCH) or a physical uplink shared channel (PUSCH).

In an example, the information indicating a transmission period is or comprises information on a length or size of said transmission period. As already mentioned, the size or length or the transmission period may be a certain number of slots, sub-frames or frames. In an example, the size or length of the transmission period may be 1 slot In an example, the size or length of the transmission period may be 2 slots. In another example, the size or length of the transmission period may be 3 slots. The slot size in turn may depend on the slot configuration. E.g. for slot configuration 0, the number of symbols for a slot is 14 and for slot configuration 1, the number of symbols for a slot is 7. The information indicating the transmission period may be part of the resource configuration.

In an example, the one or more transmission states are transmission configuration indicator, TCI, states. The transmission configuration data may for instance comprise a list of respective transmission states. As already mentioned, a TCI state may indicate a QCL configuration (e.g. for PDCCH), which configuration may include one or more quasi co-location (QCL) relationships, e.g. between one or two downlink reference signals and physical layer reference signal ports, e.g. DM-RS port(s) of the PDSCH, DM-RS port(s) of PDCCH or CSI-RS port(s) of a CSI-RS resource. The transmission configuration data may be part of the resource configuration.

In an example, information indicating one or more further monitoring occasions by repeating a monitoring occasion defined by the monitoring information is obtained. For instance, the monitoring information (e.g. a search space set associated with a respective CORESET) may define one (original) monitoring occasion at a certain resource in the time domain. The information indicating one or more further monitoring occasions may then define a number of how often (e.g. "N" times) this (original) monitoring occasion (or CORESET) may be repeated. This information may be provided as part of the resource configuration (e.g. CORESET). For instance, the monitoring occasion defined by the monitoring information is at a certain position in a slot (e.g. in a certain symbol, for instance the first symbol of the slot). The one or more further monitoring occasions may then be provided in following symbols of the same slot. Therein, the same configuration may be used for the further monitoring occasions, except that they are at a different position in the time domain (e.g. in a different symbol of the slot) and that a different transmission state may be assumed, as prescribed by the mapping scheme explained above.

Accordingly, the mapping scheme then defines a mapping between at least one of said one or more transmission states and said monitoring occasions including the further monitoring occasions as defined above within said transmission period.

In order to specify the respective positions in the time domain of the further monitoring occasions, in an example, offset information indicating a time domain offset for respective further monitoring occasions may be obtained. The time domain offset may indicate the offset with respect to the original monitoring occasion or a respective previous monitoring occasion. For instance, in an example the monitoring occasion indicated by the monitoring information is positioned in the first symbol of a slot and the information indicating further monitoring occasions indicate that this monitoring occasion or CORESET shall be repeated (or copied or cloned) three times. Further, the offset information may indicate an offset of 2 symbols. As a result, there is not only the original monitoring occasion in the first symbol of the slot (as defined by the monitoring information), but also in the third, fifth and seventh symbol of the slot.

In an example, said transmission configuration data defines multiple transmission states for said resource configuration. Accordingly, said activation information may indicate multiple active transmission states. Utilizing multiple active transmission states for the mapping scheme not only allows control channel repetition, but also to receive the control data with different or changing parameters as defined by the different transmission states, e.g. allowing diversity (such as hopping or cycling) with respect to e.g. beam and/or frequency.

In this regard, in an example, said at least one of said one or more transmission states, which is used for in the mapping scheme, is an active transmission state. For instance, only active or activated transmission states are used for the mapping scheme. Preferably, multiple transmission states are activated, such that there is mapping between multiple active transmission states and multiple monitoring occasions within said transmission period.

In this regard, in an example of the first aspect, activation information indicating the activation of one or more transmission states are received. Specifically, said apparatus of the first aspect may further comprise means for obtaining activation information indicating one or more active transmission states of said one or more transmission states. Accordingly, in an example of the second aspect, activation information indicating the activation of one or more transmission states are provided. Such a signaling may for instance be performed via higher layer signaling, e.g. via a MAC CE.

In an example, said mapping scheme comprises mapping of said one or more activate transmission states sequentially to the monitoring occasions. For this, the (active) transmission states may be provided as a list or as a sequence. If there are more (active) transmission states than monitoring occasions within a transmission period, only a subset (e.g. a first part) of the transmission states may be mapped onto the respective monitoring occasions. If there are more monitoring occasions than (active) transmission states, the transmission states may be reused (e.g. repeatedly cycled through) as often as necessary.

In an example, said mapping scheme comprises repeating said mapping of said one or more active transmission states sequentially to the monitoring occasions after all active transmission states having been mapped.

In an example, said mapping scheme comprises mapping an n-th active transmission state at least to an n-th monitoring occasion within said transmission period.

Thus, in an example, said mapping scheme comprises mapping a first active transmission state at least to a first monitoring occasion within said transmission period. Likewise, said mapping scheme may comprise mapping a second active transmission state at least to a second monitoring occasion within said transmission period, and so on.

In an example, said mapping scheme comprises, after all active transmission states having been mapped to a monitoring occasion within said transmission period, again at least mapping the first active transmission state to a next monitoring occasion within said transmission period. For instance, if there are 2 active transmission states and 4 monitoring occasions within the transmission period, the first active transmission state would again be mapped to the third monitoring occasion and so on.

It is noted that the describe mapping scheme are only examples and other and in particular more complex mapping scheme may be used, e.g. wherein the mapping is governed by a mathematical function or term, for instance.

In an example, each transmission of control data on said control channel within a respective transmission period comprises the same control data. This provides multiple opportunities for a UE to (correctly) receive the control data. Specifically, if different transmission states are used, the probability is increased that the apparatus will receive on transmission of control data successfully. Moreover, the apparatus may perform a soft-combining of multiple received instances of control data.

Accordingly, it is particularly preferred that the multiple transmission states and specifically said multiple active transmission states at least in part define different transmission parameters. For instance, a transmission parameter, which differs in at least two (active) transmission states, relates to a frequency or frequency region used for receiving the control data over the control channel. For instance, a transmission parameter, which differs in at least two (active) transmission states, relates to a beam used for receiving the control data over the control channel. Accordingly said multiple (active) transmission states at least in part define may different beam parameters or different beams.

In an example, the control data comprises information indicating a time resource within the transmission period used for the original transmission of the control data. For instance, the information indicating the time resource may indicate the number of the time resource (e.g. the slot number), in which the control data was originally transmitted. For instance, in case the transmission period has a length of two slots, the information indicating the time resource within the transmission period only needs to have a size of 1 bit (e.g. a 1 bit information field), for instance. In case of a transmission period of four slots, only a 2 bit of additional information would be needed in the control data in order to indicate the time resource of the original transmission of control data. This is in particular relevant in case the control data schedules or allocates time domain resources, as the time domain allocation needs to be done from the original transmission in order to be unambiguous. Accordingly, in an example, the information indicating a time resource within the transmission period used for the original transmission of the control data can advantageously be used for a determination of a time domain resource allocated or scheduled by the control data.

This example advantageously solves the problem that occurs if the UE only detects the n-th (repeated) control data transmission. As the payload needs to be the same for each repetition, the additional information allows the UE to correctly determine and calculate a time domain resource allocation e.g. for a scheduled PDSCH transmission.

In an example, it may be either explicitly or implicitly (e.g. dynamically) signaled to the UE, that control channel repetition and/or diversity is used for a certain resource configuration. For instance, if there is only one active transmission state, the UE may assume that control channel repetition is used if the resource configuration is configured to have multiple transmissions for a single control data. If there is more than one active transmission state, the UE may assume that repetition and also diversity (e.g. with respect to frequency or beam) is used, if the resource configuration is configured to have multiple transmissions for the single control data.

It is to be understood that the presentation of the embodiments disclosed herein is merely by way of examples and non-limiting.

Other features of the present disclosure will become apparent from the following detailed description considered in conjunction with the accompanying drawings. It is to be understood, however, that the drawings are designed solely for purposes of illustration and not as a definition of the limits of the present disclosure, for which reference should be made to the appended claims. It should be further understood that the drawings are not drawn to scale and that they are merely intended to conceptually illustrate the structures and procedures described herein.

### BRIEF DESCRIPTION OF THE FIGURES

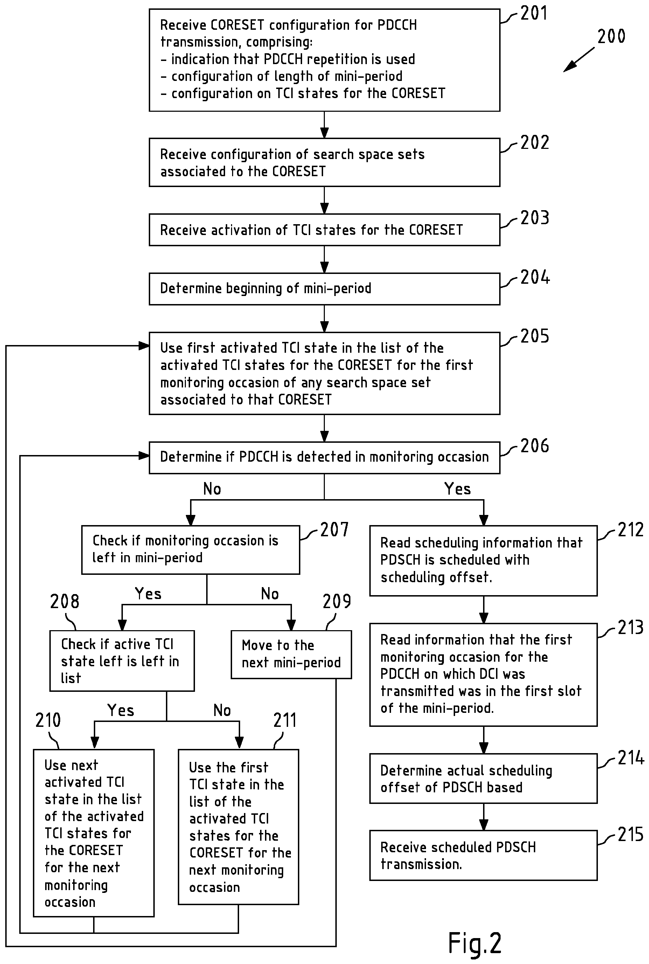

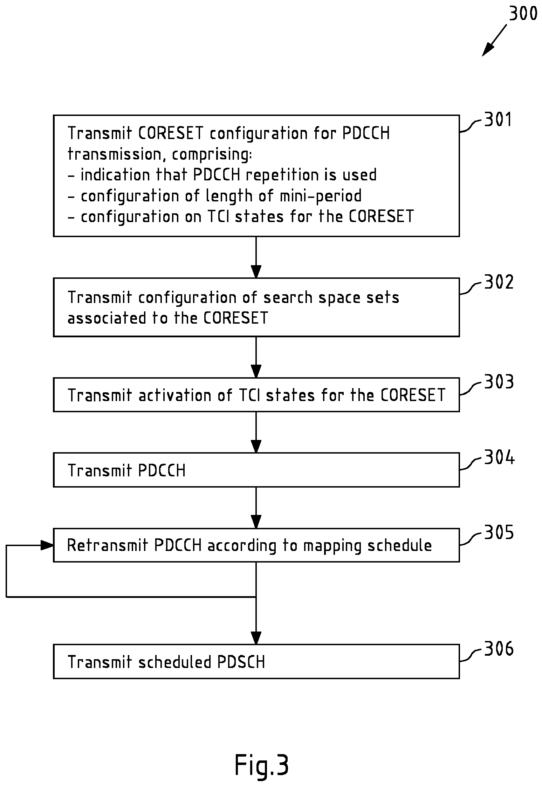

The invention is described with reference to figures 2 and 3.
- Fig. 1: is a schematic diagram illustrating an example radio environment in which exemplary embodiments of the present disclosure may be performed;
- Fig. 2: is a flow diagram of an exemplary method of the first aspect of the present disclosure;
- Fig. 3: is a flow diagram of an exemplary method of the second aspect of the present disclosure;
- Fig. 4: is a schematic illustration of an example of a repeated control data transmission in the time domain with a mapping scheme according to the present disclosure;
- Fig. 5: is a schematic illustration of another example of a repeated control data transmission in the time domain with a mapping scheme according to the present disclosure;
- Fig. 6: is a block diagram of an exemplary embodiment of an apparatus according to the present disclosure;
- Fig. 7: is a block diagram of an exemplary embodiment of a base station; and
- Fig. 8: is a schematic illustration of examples of tangible and non-transitory computer-readable storage media.

The following description serves to deepen the understanding of the present disclosure and shall be understood to complement and be read together with the description of example embodiments of the present disclosure as provided in the above SUMMARY section of this specification.

Embodiments of these teachings relate to the triggering and transmission of scheduling requests in a radio system. While the specific radio system in the examples below is 5G, this is a non-limiting embodiment

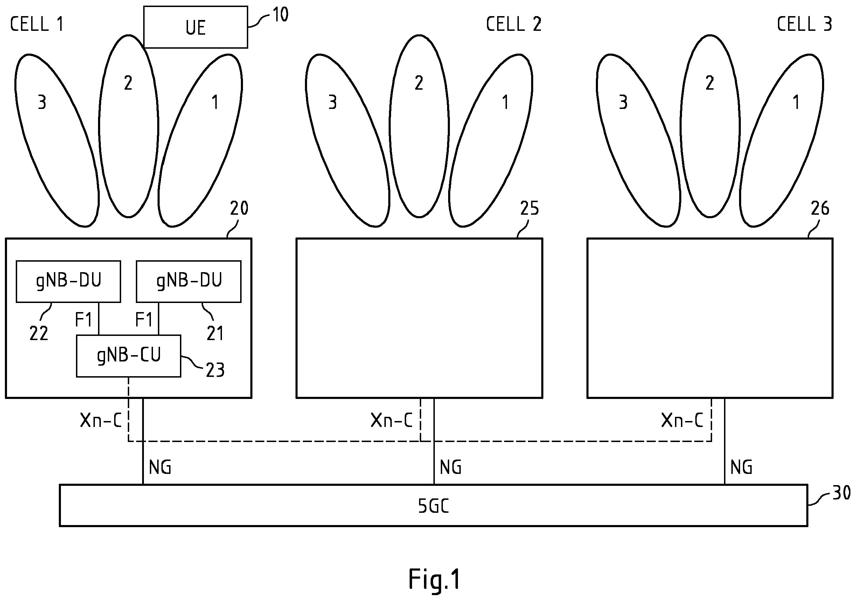

Fig. 1 shoes an example environment, in which the present disclosure may be applied. Fig. 1 shows a 5G communication network, which introduces the New Radio technology and also an architecture for which the different sublayers of the RAN may be split into two logical entities in a communication network control element (like a BS or gNB), which are referred to as distributed unit (DU) and central unit (CU). For example, the CU is a logical node that controls the operation of one or more DUs over a front-haul interface (referred to as F1 interface). The DU is a logical node including a subset of the gNB functions, depending on the functional split option.

As shown in Fig. 1, an apparatus such as a user equipment (UE) 10, as an example of an apparatus of the first exemplary aspect, is connected to a cell 1 of a base station, a gNB 20, as an example of an apparatus of the second exemplary aspect, via a communication beam of the cell 1. In the example shown in Fig. 1, the gNB 20 is provided with a CU 23 and two DUs 21 and 22 being connected to the CU 23 by a F1 interface. Furthermore, as shown in the example of Fig. 1, there is a plurality of further cells ( for illustrative purposes, two cells, i.e. cell 2 and cell 3 are shown) to which the UE 10 can connect Similarly to cell 1, cells 2 and 3 are controlled by gNB 25 and 26, respectively, and each provides a plurality of beams 1 to 3. The different beams of a 5G network may be used for beam diversity or beam hopping.

As shown in Fig. 1, each base station or gNB of the cells is connected to a core network, such as a 5GC, via respective interfaces, indicated as NG interfaces. Furthermore, each gNB of the cells is connected with each other by means of a specific interface, which is referred to e.g. as an Xn-C interface.

As will be explained in more detail below with respect to Fig. 2 - 5, it is now proposed to define a transmission period for repeated transmission of control data over a control channel, which will be referred to as mini-period in the following. The mini period may be one or two slots, for example. Also, a mapping rule is defined between activated TCI states of the CORESET and monitoring occasions defined by the associated search space sets to that CORESET within the mini-period.

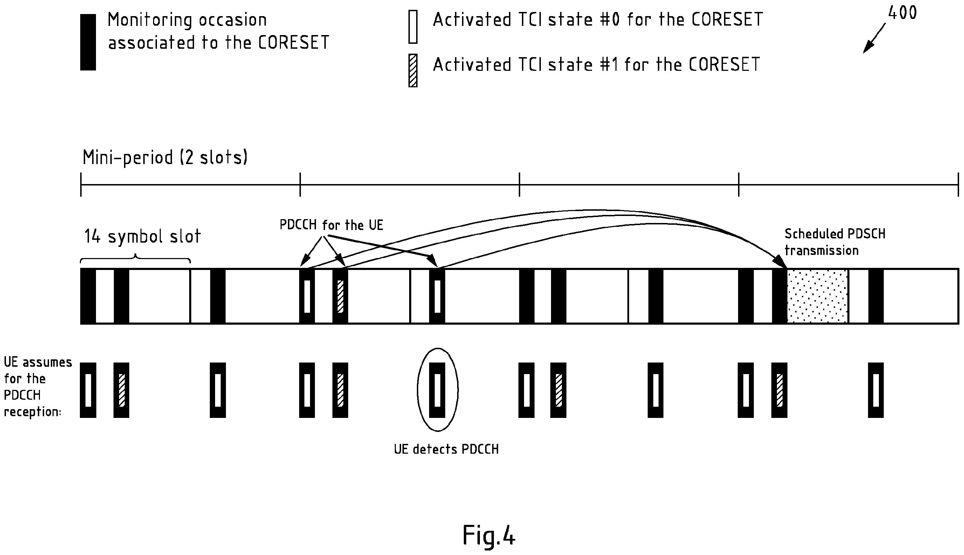

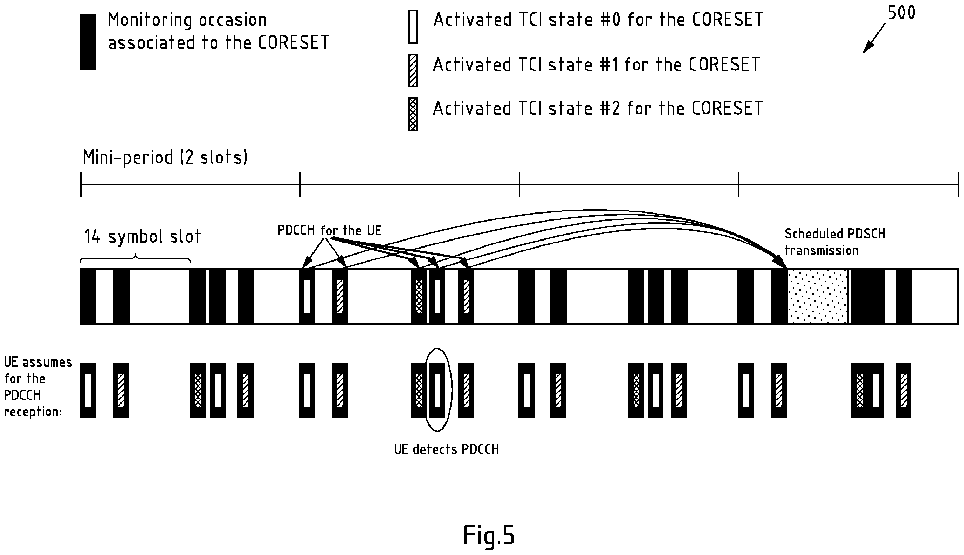

It will now be referred collectively to Figs. 2 to 5, wherein Fig. 2 is a flow diagram 200 of an exemplary method of the first aspect of the present disclosure and Fig. 3 is a flow diagram 300 of an exemplary method of the second aspect of the present disclosure. Fig. 4 and 5 are schematic illustrations 400, 500 of two examples of a repeated control data transmission in the time domain with a mapping scheme according to the present disclosure.

The base station (e.g. a gNB) will transmit a CORESET configuration for PDCCH transmission to the UE, action 301. The CORESET configuration comprises a configuration or indication that PDCCH repetition is used. Further the CORESET configuration comprises a configuration of the length or size of the mini-period. A mini-period with a length of two slots will be used as a non-limiting example. Further, the CORESET configuration comprises a configuration of the TCI states for the CORESET. Accordingly, the UE receives the CORESET configuration for PDCCH transmission from the base station, action 201.

The base station further transmits a configuration of the search space sets associated to the CORESET, action 302, and the UE receives the configuration of the search space sets associated to the CORESET from the base station, action 202. In one example, there may be three non-overlapping monitoring occasions within the mini-period. Such a scenario is exemplarily shown in Fig. 4. In another example, there may be five non-overlapping monitoring occasions within the mini-period. Such a scenario is exemplarily shown in Fig. 5.

In an example, the search space set may for instance only define a single monitoring occasion, but the UE may be configured with a CORESET where the configuration indicates that the CORESET (and thus the monitoring occasion defined by the search space set associated with the corset) shall be repeated or "cloned" N times. Each of these clones or copies will then be mapped to a TCI state provided for the CORESET, as described below. Each clone or copy is allocated in the time domain in a fixed position relative to the original CORESET. While the time domain allocation of the original CORESET is provided by the associated search space set(s), the time domain allocations of the clones or copies are provided by the above configuration (fixed position relative to the original CORESET). For instance, the original CORESET is has a monitoring occasion (time domain allocation) in the 1st symbol of the slot and the clones or copies are having monitoring occasions in 3rd, 5th and 7th symbol of the slot (assuming 3 clones or copies and two symbols fixed allocation offset per clone).

The base station signals the activation of three TCI states for the CORESET, action 303. Accordingly, the UE receives the activation of three TCI states for the CORESET from the base station, action 203.

The UE can then determine the beginning of mini-period, action 204. For instance, the beginning may be determined using the mod function. The beginning of the current instance of the mini period is reached if mod(current slot number, period length in slots) equals 0. In the present example of a mini period of 2 slots, the beginning of the current instance of the mini period is reached if mod(current slot number, 2) = 0.

In this example, the UE assumes the following rule or mapping scheme for mapping of the active TCI states to the monitoring occasions within the mini-period.

In the beginning of the mini-period the UE assumes the first activated TCI state in the list of the activated TCI states for the CORESET for the first monitoring occasion of any search space set associated to that CORESET, action 205.

The UE may check if there are any monitoring occasions left in the mini-period, action 207, and if there are any active TCI states left in left in the list, action 208.

If both is the case, then the UE assumes the second activated TCI state in the list of the activated TCI states for the CORESET for the second monitoring occasion of any search space set associated to that CORESET, action 210, and so.

In case there are no monitoring occasion left in the mini-period, the UE moves to the next mini-period, action 209.

In case all the activated TCI states have been assumed but there is/are still monitoring occasions left in the mini-period, then the UE again assumes the first TCI state in the list of the activated TCI states for the CORESET for the next monitoring occasion of any search space set associated to that CORESET, action 211.

For each monitoring occasion, the UE checks whether it detects a PDCCH message, action 206. The base station transmits and retransmits PDCCH DCI messages according to the mapping scheme, actions 304, 305, as already described for the receiver side with respect to actions 205 and 207 - 211.

In an example, the UE may detect a PDCCH DCI message re-transmitted by the base station and directed to the UE in one of the monitoring occasions in the second slot of the mini-period, as exemplarily shown in the scenarios of Fig. 4 and in Fig. 5. However, it may have missed previous transmission in the first and/or second slot, as also shown in Fig. 4 and 5. The UE then receives the scheduling information from the PDCCH DCI message that a PDSCH is scheduled with a scheduling offset of 4 slots, action 212.

The UE also obtains information in the PDCCH message that the first monitoring occasion for the PDCCH in which the DCI was transmitted was actually in the first slot of the mini-period, action 213. This may be indicated by a 1-bit information field in the detected PDCCH DCI. From this, the UE determines that the PDSCH is actually scheduled with scheduling offset of 3 slots calculated from the slot in which it has detected the PDCCH, action 214, i.e. UE had missed PDCCH(s) in the first (Fig. 4) or in both the first and second (Fig. 5) slot of the mini-period.

The UE can then receive the scheduled PDSCH transmission, action 215, transmitted from the base station, action 306.

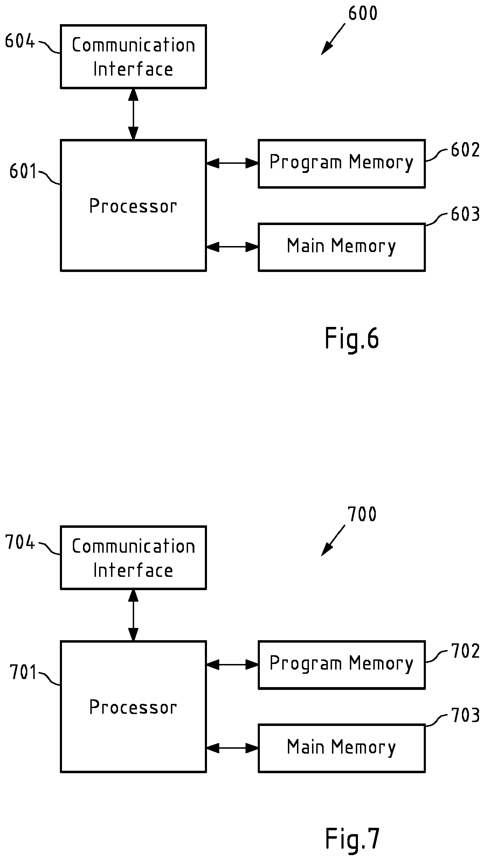

Fig. 6 is a block diagram of an exemplary embodiment of an apparatus according to the present disclosure representing a UE, such as UE 10 of Fig. 1 in the form of a mobile device 600. For example, mobile device 600 may be one of a smartphone, a tablet computer, a notebook computer, a smart watch, a smart band and an IoT device.

Mobile device 600 comprises a processor 601. Processor 601 may represent a single processor or two or more processors, which are for instance at least partially coupled, for instance via a bus. Processor 601 executes a program code stored in program memory 602 (for instance program code causing mobile device 600 to perform one or more of the embodiments of a method according to the present disclosure or parts thereof, when executed on processor 601), and interfaces with a main memory 603. Program memory 602 may also contain an operating system for processor 601. Some or all of memories 602 and 603 may also be included into processor 601.

One of or both of a main memory and a program memory of a processor (e.g. program memory 602 and main memory 603) could be fixedly connected to the processor (e.g. processor 601) or at least partially removable from the processor, for instance in the form of a memory card or stick.

A program memory (e.g. program memory 602) may for instance be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable from, for instance in the form of a removable SD memory card.

A main memory (e.g. main memory 603) may for instance be a volatile memory. It may for instance be a DRAM memory, to give non-limiting example. It may for instance be used as a working memory for processor 601 when executing an operating system, an application, a program, and/or the like.

Processor 601 further controls a communication interface 604 (e.g. radio interface) configured to receive and/or transmit data and/or information. For instance, communication interface 604 may be configured to transmit and/or receive radio signals from a radio node, such as a base station. It is to be understood that any computer program code based processing required for receiving and/or evaluating radio signals may be stored in an own memory of communication interface 604 and executed by an own processor of communication interface 604 or it may be stored for example in memory 603 and executed for example by processor 601.

Communication interface 604 may in particular be configured to communicate according to a cellular communication system like a 2G/3G/4G/5G or future generation cellular communication system. Mobile device 600 may use radio interface 604 to communicate with a base station, e.g. base station 20 depicted in Fig. 1.

For example, the communication interface 604 may further comprise a BLE and/or Bluetooth radio interface including a BLE transmitter, receiver or transceiver. For example, radio interface 604 may additionally or alternatively comprise a WLAN radio interface including at least a WLAN transmitter, receiver or transceiver.

The components 602 to 604 of mobile device 600 may for instance be connected with processor 601 by means of one or more serial and/or parallel busses.

It is to be understood that mobile device 600 may comprise various other components. For example, mobile device 600 may optionally comprise a user interface (e.g. a touch-sensitive display, a keyboard, a touchpad, a display, etc.).

Fig. 7 is a block diagram of an exemplary embodiment of an apparatus, such as base station 20 of Fig. 1. For instance, apparatus 700 may be configured for receiving and processing scheduling request sent by apparatus 600 as described above.

Apparatus 700 comprises a processor 701. Processor 701 may represent a single processor or two or more processors, which are for instance at least partially coupled, for instance via a bus. Processor 701 executes a program code stored in program memory 702 (for instance program code causing apparatus 700 to perform together with apparatus 600 embodiments according to the present disclosure or parts thereof), and interfaces with a main memory 703.

Program memory 702 may also comprise an operating system for processor 701. Some or all of memories 702 and 703 may also be included into processor 701.

Moreover, processor 701 controls a communication interface 704 which is for example configured to communicate according to a cellular communication system like a 2G/3G/4G/5G cellular communication system. Communication interface 704 of apparatus 700 may be realized by radio heads 30 for instance and may be provided for communicate between base station 20 and UE 10 in Fig. 1.

The components 702 to 704 of apparatus 700 may for instance be connected with processor 701 by means of one or more serial and/or parallel busses.

Apparatus 600 together with communication interface 604 may in particular be configured for receiving control data or messages over a control channel from a base station 700 according to the mapping scheme describe herein.

It is to be understood that apparatuses 600, 700 may comprise various other components.

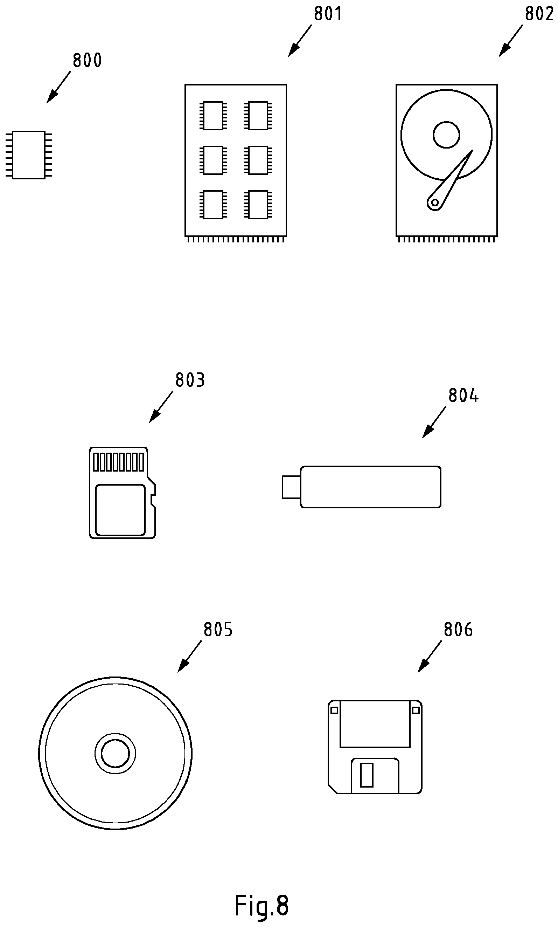

Fig. 8 is a schematic illustration of examples of tangible and non-transitory computer-readable storage media according to the present disclosure that may for instance be used to implement memory 602 of Fig. 6 or memory 702 of Fig. 7. To this end, Fig. 8 displays a flash memory 800, which may for instance be soldered or bonded to a printed circuit board, a solid-state drive 801 comprising a plurality of memory chips (e.g. Flash memory chips), a magnetic hard drive 802, a Secure Digital (SD) card 803, a Universal Serial Bus (USB) memory stick 804, an optical storage medium 805 (such as for instance a CD-ROM or DVD) and a magnetic storage medium 806.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (i) to a combination of processor(s) or (ii) to sections of processor(s)/ software (including digital signal processor(s)), software, and memory(ies) that work together to cause an apparatus, such as a mobile phone, to perform various functions) and
(c) to circuits, such as a microprocessor(s) or a section of a microprocessor(s), that require software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors 601 and 701 of Figs. 6 and 7, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

Moreover, any of the actions described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof' or "at least one of A, B and C" may be understood to be not exhaustive and to include at least the following: (i) A, or (ii) B, or (iii) C, or (iv) A and B, or (v) A and C, or (vi) B and C, or (vii) A and B and C.

It will be understood that the embodiments disclosed herein are only exemplary, and that any feature presented for a particular exemplary embodiment may be used with any aspect of the present disclosure on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

## Claims

1. A user equipment, UE, apparatus (10) comprising means for:
- obtaining (201) a resource configuration for a control channel carrying control data,
- obtaining (201) information indicating a transmission period for a repeated transmission of said control data on said control channel;
- obtaining (201) a transmission configuration data defining one or more transmission states for said resource configuration;
- obtaining (202) monitoring information indicating one or more monitoring occasions associated with said resource configuration; and
- monitoring (206 - 211) said control channel for control data on said monitoring occasions by using a mapping scheme between at least one of said one or more transmission states and said monitoring occasions within said transmission period.

2. Apparatus according to claim 1, wherein one or more of the following applies:
- said resource configuration is or comprises a control resource set, CORESET;
- said control channel is or comprises a physical downlink control channel, PDCCH;
- said control channel is or comprises a physical uplink control channel, PUCCH;
- said control data is or comprises downlink control information, DCI;
- said control data is or comprises uplink control information, UCI;
- said control data schedules a transmission of a shared channel;
- said information indicating a transmission period is or comprises information on a length or size of said transmission period;
- said one or more transmission states are transmission configuration indicator, TCI, states.

3. Apparatus according to claim 1 or 2, wherein said apparatus further comprises means for:
- obtaining information indicating one or more further monitoring occasions by repeating a monitoring occasion defined by the monitoring information; and
- obtaining offset information indicating a time domain offset for respective further monitoring occasions.

4. Apparatus according to any of the preceding claims, wherein said transmission configuration data defines multiple transmission states for said resource configuration.

5. Apparatus according to any of the preceding claims, wherein said at least one of said one or more transmission states, used for said mapping scheme, is an active transmission state.

6. Apparatus according to any of the preceding claims, wherein said apparatus further comprises means for
- obtaining (203) activation information indicating one or more active transmission states of said one or more transmission states.

7. Apparatus according to claim 6, wherein said activation information indicates multiple active transmission states.

8. Apparatus according to any of claims 5 to 7, wherein said mapping scheme comprises one or more of:
- mapping (205, 210) of said one or more activate transmission states sequentially to the monitoring occasions;
- repeating (211, 210) said mapping of said one or more active transmission states sequentially to the monitoring occasions after all active transmission states having been mapped;
- mapping an n-th active transmission state at least to an n-th monitoring occasion within said transmission period;
- mapping (205) a first active transmission state at least to a first monitoring occasion within said transmission period;
- mapping (210) a second active transmission state at least to a second monitoring occasion within said transmission period;
- after all active transmission states having been mapped to a monitoring occasion within said transmission period, again at least mapping (211) the first active transmission state to a next monitoring occasion within said transmission period.

9. Apparatus according to any of the preceding claims, wherein each transmission of control data on said control channel within a respective transmission period comprises the same control data.

10. Apparatus according to any of the preceding claims, wherein said multiple transmission states and/or said multiple active transmission states at least in part define one or more of
- different transmission parameters;
- different beam parameters;
- different beams.

11. Apparatus according to any of the preceding claims, wherein said control data comprises information indicating a time resource within the transmission period used for the original transmission of the control data, and wherein said information indicating a time resource within the transmission period is used for determining a time domain resource allocated by the control data.

12. Apparatus according to any of the preceding claims, wherein said apparatus is
- a mobile apparatus.

13. Method, performed by at least one user equipment, UE, apparatus, the method comprising:
- obtaining (201) a resource configuration for a control channel carrying control data,
- obtaining (201) information indicating a transmission period for a repeated transmission of said control data on said control channel;
- obtaining (201) transmission configuration data defining one or more transmission states for said resource configuration;
- obtaining (202) monitoring information indicating one or more monitoring occasions associated with said resource configuration; and
- monitoring (206 - 211) said control channel for control data on said monitoring occasions by using a mapping scheme between at least one of said one or more transmission states and said monitoring occasions within said transmission period.

14. Base station apparatus (20, 25, 26) comprising means for:
- providing (301) a resource configuration for a control channel carrying control data,
- providing (301) information indicating a transmission period for a repeated transmission of said control data on said control channel;
- providing (301) transmission configuration data defining one or more transmission states for said resource configuration;
- providing (302) monitoring information indicating one or more monitoring occasions associated with said resource configuration; and
- sending (304, 305) control data over said control channel on said monitoring occasions by using a mapping scheme between at least one of said one or more transmission states and said monitoring occasions within said transmission period.

15. Method, performed by at least one base station apparatus, the method comprising:
- providing (301) a resource configuration for a control channel carrying control data,
- providing (301) information indicating a transmission period for a repeated transmission of said control data on said control channel;
- providing (301) transmission configuration data defining one or more transmission states for said resource configuration;
- providing (302) monitoring information indicating one or more monitoring occasions associated with said resource configuration; and
- sending (304, 305) control data over said control channel on said monitoring occasions by using a mapping scheme between at least one of said one or more transmission states and said monitoring occasions within said transmission period.

## Patentansprüche

1. Teilnehmereinrichtungs(UE)-Vorrichtung (10), die Mittel für Folgendes umfasst:
- Erhalten (201) einer Ressourcenauslegung für einen Steuerkanal, auf dem Steuerdaten transportiert werden,
- Erhalten (201) von Informationen, die eine Übertragungsperiode für eine wiederholte Übertragung der Steuerdaten auf dem Steuerkanal anzeigen;
- Erhalten (201) von Übertragungsauslegungsdaten, die einen oder mehrere Übertragungszustände für die Ressourcenauslegung definieren;
- Erhalten (202) von Überwachungsinformationen, die eine oder mehrere Überwachungsgelegenheiten anzeigen, die mit der Ressourcenauslegung verknüpft sind; und
- Überwachen (206-211) des Steuerkanals auf Steuerdaten bei den Überwachungsgelegenheiten durch Verwenden eines Zuordnungsplans zwischen mindestens einem des einen oder der mehreren Übertragungszustände und den Überwachungsgelegenheiten in der Übertragungsperiode.

2. Vorrichtung nach Anspruch 1, wobei eines oder mehreres von Folgendem gilt:
- die Ressourcenauslegung ist ein Steuerressourcensatz, CORESET, oder umfasst einen solchen;
- der Steuerkanal ist ein physischer Downlinksteuerkanal, PDCCH, oder umfasste einen solchen;
- der Steuerkanal ist ein physischer Uplinksteuerkanal, PUCCH, oder umfasst einen solchen;
- die Steuerdaten sind Downlinksteuerinformationen, DCI, oder umfassen solche;
- die Steuerdaten sind Uplinksteuerinformationen, UCI, oder umfassen solche;
- die Steuerdaten planen eine Übertragung auf einem gemeinsam verwendeten Kanal;
- die Informationen, die eine Übertragungsperiode anzeigen, sind Informationen über eine Länge oder eine Größe der Übertragungsperiode oder umfassen solche;
- der eine oder die mehreren Übertragungszustände sind Übertragungsauslegungsindikator(TCI)-Zustände.

3. Vorrichtung nach Anspruch 1 oder 2, wobei die Vorrichtung ferner Mittel für Folgendes umfasst:
- Erhalten von Informationen, die durch Wiederholen einer Überwachungsgelegenheit, die durch die Überwachungsinformationen definiert wird, eine oder mehrere weitere Überwachungsgelegenheiten anzeigen; und
- Erhalten von Versatzinformationen, die einen Zeitdomänenversatz für jeweilige weitere Überwachungsgelegenheiten anzeigen.

4. Vorrichtung nach einem der vorhergehenden Ansprüche, wobei die Übertragungsauslegungsdaten mehrere Übertragungszustände für die Ressourcenauslegung definieren.

5. Vorrichtung nach einem der vorhergehenden Ansprüche, wobei der mindestens eine des einen oder der mehreren Übertragungszustände, der für den Zuordnungsplan verwendet wird, ein aktiver Übertragungszustand ist.

6. Vorrichtung nach einem der vorhergehenden Ansprüche, wobei die Vorrichtung ferner Mittel für Folgendes umfasst
- Erhalten (203) von Aktivierungsinformationen, die einen oder mehrere aktive Übertragungszustände des einen oder der mehreren Übertragungszustände anzeigen.

7. Vorrichtung nach Anspruch 6, wobei die Aktivierungsinformationen mehrere aktive Übertragungszustände anzeigen.

8. Vorrichtung nach einem der Ansprüche 5 bis 7, wobei der Zuordnungsplan eines oder mehreres von Folgendem umfasst:
- sequenzielles Zuordnen (205, 210) des einen oder der mehreren aktiven Übertragungszustände zu den Überwachungsgelegenheiten;
- sequenzielles Wiederholen (211, 210) des Zuordnens des einen oder der mehreren aktiven Übertragungszustände zu den Überwachungsgelegenheiten, nachdem alle aktiven Übertragungszustände zugeordnet wurden;
- Zuordnen eines n-ten aktiven Übertragungszustands innerhalb der Übertragungsperiode mindestens zu einer n-ten Überwachungsgelegenheit;
- Zuordnen (205) eines ersten aktiven Übertragungszustands innerhalb der Übertragungsperiode mindestens zu einer ersten Überwachungsgelegenheit;
- Zuordnen (210) eines zweiten aktiven Übertragungszustands innerhalb der Übertragungsperiode mindestens zu einer zweiten Überwachungsgelegenheit;
- nachdem alle aktiven Übertragungszustände innerhalb der Übertragungsperiode einer Überwachungsgelegenheit zugeordnet wurden, erneutes mindestens Zuordnen (211) des ersten aktiven Übertragungszustands innerhalb der Übertragungsperiode zu einer nächsten Überwachungsgelegenheit.

9. Vorrichtung nach einem der vorhergehenden Ansprüche, wobei jede Übertragung von Steuerdaten auf dem Steuerkanal innerhalb einer jeweiligen Übertragungsperiode dieselben Steuerdaten umfasst.

10. Vorrichtung nach einem der vorhergehenden Ansprüche, wobei die mehreren Übertragungszustände und/oder die mehreren aktiven Übertragungszustände mindestens teilweise eines oder mehreres von Folgendem definieren
- verschiedene Übertragungsparameter;
- verschiedene Strahlparameter;
- verschiedene Strahlen.

11. Vorrichtung nach einem der vorhergehenden Ansprüche, wobei die Steuerdaten Informationen umfassen, die eine Zeitressource innerhalb der Übertragungsperiode anzeigen, die für die Originalübertragung der Steuerdaten verwendet wird, und wobei die Informationen, die eine Zeitressource innerhalb der Übertragungsperiode anzeigen, zum Bestimmen einer Zeitdomänenressource, die durch die Steuerdaten zugeteilt wird, verwendet werden.

12. Vorrichtung nach einem der vorhergehenden Ansprüche, wobei die Vorrichtung Folgendes ist
- eine mobile Vorrichtung.

13. Verfahren, das von mindestens einer Teilnehmereinrichtungs(UE)-Vorrichtung durchgeführt wird, wobei das Verfahren Folgendes umfasst:
- Erhalten (201) einer Ressourcenauslegung für einen Steuerkanal, auf dem Steuerdaten transportiert werden,
- Erhalten (201) von Informationen, die eine Übertragungsperiode für eine wiederholte Übertragung der Steuerdaten auf dem Steuerkanal anzeigen;
- Erhalten (201) von Übertragungsauslegungsdaten, die einen oder mehrere Übertragungszustände für die Ressourcenauslegung definieren;
- Erhalten (202) von Überwachungsinformationen, die eine oder mehrere Überwachungsgelegenheiten anzeigen, die mit der Ressourcenauslegung verknüpft sind; und
- Überwachen (206-211) des Steuerkanals auf Steuerdaten bei den Überwachungsgelegenheiten durch Verwenden eines Zuordnungsplans zwischen mindestens einem des einen oder der mehreren Übertragungszustände und den Überwachungsgelegenheiten in der Übertragungsperiode.

14. Basisstationsvorrichtung (20, 25, 26), die Mittel für Folgendes umfasst:
- Bereitstellen (301) einer Ressourcenauslegung für einen Steuerkanal, auf dem Steuerdaten transportiert werden,
- Bereitstellen (301) von Informationen, die eine Übertragungsperiode für eine wiederholte Übertragung der Steuerdaten auf dem Steuerkanal anzeigen;
- Bereitstellen (301) von Übertragungsauslegungsdaten, die einen oder mehrere Übertragungszustände für die Ressourcenauslegung definieren;
- Bereitstellen (302) von Überwachungsinformationen, die eine oder mehrere Überwachungsgelegenheiten anzeigen, die mit der Ressourcenauslegung verknüpft sind; und
- Senden (304, 305) von Steuerdaten auf dem Steuerkanal bei den Überwachungsgelegenheiten durch Verwenden eines Zuordnungsplans zwischen mindestens einem des einen oder der mehreren Übertragungszustände und den Überwachungsgelegenheiten in der Übertragungsperiode.

15. Verfahren, das von mindestens einer Basisstationsvorrichtung durchgeführt wird, wobei das Verfahren Folgendes umfasst:
- Bereitstellen (301) einer Ressourcenauslegung für einen Steuerkanal, auf dem Steuerdaten transportiert werden,
- Bereitstellen (301) von Informationen, die eine Übertragungsperiode für eine wiederholte Übertragung der Steuerdaten auf dem Steuerkanal anzeigen;
- Bereitstellen (301) von Übertragungsauslegungsdaten, die einen oder mehrere Übertragungszustände für die Ressourcenauslegung definieren;
- Bereitstellen (302) von Überwachungsinformationen, die eine oder mehrere Überwachungsgelegenheiten anzeigen, die mit der Ressourcenauslegung verknüpft sind; und
- Senden (304, 305) von Steuerdaten auf dem Steuerkanal bei den Überwachungsgelegenheiten durch Verwenden eines Zuordnungsplans zwischen mindestens einem des einen oder der mehreren Übertragungszustände und den Überwachungsgelegenheiten in der Übertragungsperiode.

## Revendications

1. Appareil d'équipement utilisateur, UE, (10) comprenant des moyens pour :
- obtenir (201) une configuration de ressources pour un canal de contrôle transportant des données de contrôle,
- obtenir (201) des informations indiquant une période de transmission pour une transmission répétée desdites données de contrôle sur ledit canal de contrôle ;
- obtenir (201) des données de configuration de transmission définissant un ou plusieurs états de transmission pour ladite configuration de ressources ;
- obtenir (202) des informations de surveillance indiquant une ou plusieurs occasions de surveillance associées à ladite configuration de ressources ; et
- surveiller (206-211) ledit canal de contrôle pour les données de contrôle lors desdites occasions de surveillance en utilisant un schéma de mappage entre au moins un parmi lesdits un ou plusieurs états de transmission et lesdites occasions de surveillance dans ladite période de transmission.

2. Appareil selon la revendication 1, dans lequel un ou plusieurs des cas suivants s'appliquent :
- ladite configuration de ressources est ou comprend un ensemble de ressources de contrôle, CORESET ;
- ledit canal de contrôle est ou comprend un canal physique de contrôle de liaison descendante, PDCCH ;
- ledit canal de contrôle est ou comprend un canal physique de contrôle de liaison montante, PUCCH ;
- lesdites données de contrôle sont ou comprennent des informations de contrôle de liaison descendante, DCI ;
- lesdites données de contrôle sont ou comprennent des informations de contrôle de liaison montante, UCI ;
- lesdites données de contrôle planifient une transmission d'un canal partagé ;
- lesdites informations indiquant une période de transmission sont ou comprennent des informations sur la longueur ou la taille de ladite période de transmission ;
- lesdits un ou plusieurs états de transmission sont des états d'indicateur de configuration de transmission, TCI.

3. Appareil selon la revendication 1 ou 2, dans lequel ledit appareil comprend en outre des moyens pour :
- obtenir des informations indiquant une ou plusieurs occasions de surveillance supplémentaires en répétant une occasion de surveillance définie par les informations de surveillance ; et
- obtenir des informations de décalage indiquant un décalage dans le domaine temporel pour des occasions de surveillance supplémentaires respectives.

4. Appareil selon l'une des revendications précédentes, dans lequel lesdites données de configuration de transmission définissent de multiples états de transmission pour ladite configuration de ressources.

5. Appareil selon l'une des revendications précédentes, dans lequel ledit au moins un desdits un ou plusieurs états de transmission utilisés pour ledit schéma de mappage est un état de transmission actif.

6. Appareil selon l'une des revendications précédentes, dans lequel ledit appareil comprend en outre des moyens pour
- obtenir (203) des informations d'activation indiquant un ou plusieurs états de transmission actifs desdits un ou plusieurs états de transmission.

7. Appareil selon la revendication 6, dans lequel lesdites informations d'activation indiquent de multiples états de transmission actifs.

8. Appareil selon l'une des revendications 5 à 7, dans lequel ledit schéma de mappage comprend un ou plusieurs parmi :
- le mappage (205, 210) séquentiel des desdits un ou plusieurs états de transmission actifs aux occasions de surveillance ;
- la répétition (211, 210) dudit mappage séquentiel desdits un ou plusieurs états de transmission actifs aux occasions de surveillance après que tous les états de transmission actifs ont été mappés ;
- le mappage d'un n^{ième} état de transmission actif à au moins une n^{ième} occasion de surveillance dans ladite période de transmission ;
- le mappage (205) d'un premier état de transmission actif à au moins une première occasion de surveillance dans ladite période de transmission ;
- le mappage (210) d'un deuxième état de transmission actif à au moins une deuxième occasion de surveillance dans ladite période de transmission ;
- après que tous les états de transmission actifs ont été mappés à une occasion de surveillance dans ladite période de transmission, au moins le mappage (211) à nouveau du premier état de transmission actif à une occasion de surveillance suivante dans ladite période de transmission.

9. Appareil selon l'une des revendications précédentes, dans lequel chaque transmission de données de contrôle sur ledit canal de contrôle dans une période de transmission respective comprend les mêmes données de contrôle.

10. Appareil selon l'une des revendications précédentes, dans lequel lesdits multiples états de transmission et/ou lesdits multiples états de transmission actifs définissent au moins en partie un ou plusieurs parmi
- différents paramètres de transmission ;
- différents paramètres de faisceau ;
- différents faisceaux.

11. Appareil selon l'une des revendications précédentes, dans lequel lesdites données de contrôle comprennent des informations indiquant une ressource temporelle dans la période de transmission utilisée pour la transmission originale des données de contrôle, et dans lequel lesdites informations indiquant une ressource temporelle dans la période de transmission sont utilisées pour déterminer une ressource du domaine temporel allouée par les données de contrôle.

12. Appareil selon l'une des revendications précédentes, dans lequel ledit appareil est
- un appareil mobile.

13. Procédé effectué par au moins un appareil d'équipement utilisateur, UE, le procédé comprenant les étapes suivantes :
- obtenir (201) une configuration de ressources pour un canal de contrôle transportant des données de contrôle,
- obtenir (201) des informations indiquant une période de transmission pour une transmission répétée desdites données de contrôle sur ledit canal de contrôle ;
- obtenir (201) des données de configuration de transmission définissant un ou plusieurs états de transmission pour ladite configuration de ressources ;
- obtenir (202) des informations de surveillance indiquant une ou plusieurs occasions de surveillance associées à ladite configuration de ressources ; et
- surveiller (206-211) ledit canal de contrôle pour les données de contrôle lors desdites occasions de surveillance en utilisant un schéma de mappage entre au moins un parmi lesdits un ou plusieurs états de transmission et lesdites occasions de surveillance dans ladite période de transmission.

14. Appareil de station de base (20, 25, 26) comprenant des moyens pour :
- fournir (301) une configuration de ressources pour un canal de contrôle transportant des données de contrôle,
- fournir (301) des informations indiquant une période de transmission pour une transmission répétée desdites données de contrôle sur ledit canal de contrôle ;
- fournir (301) des données de configuration de transmission définissant un ou plusieurs états de transmission pour ladite configuration de ressources ;
- fournir (302) des informations de surveillance indiquant une ou plusieurs occasions de surveillance associées à ladite configuration de ressources ; et
- envoyer (304, 305) des données de contrôle sur ledit canal de contrôle lors desdites occasions de surveillance en utilisant un schéma de mappage entre au moins un parmi lesdits un ou plusieurs états de transmission et lesdites occasions de surveillance dans ladite période de transmission.

15. Procédé, effectué par au moins un appareil de station de base, le procédé comprenant les étapes suivantes :
- fournir (301) une configuration de ressources pour un canal de contrôle transportant des données de contrôle, fournir (301) des informations indiquant une période de transmission pour une transmission répétée desdites données de contrôle sur ledit canal de contrôle ;
- fournir (301) des données de configuration de transmission définissant un ou plusieurs états de transmission pour ladite configuration de ressources ;
- fournir (302) des informations de surveillance indiquant une ou plusieurs occasions de surveillance associées à ladite configuration de ressources ; et
- envoyer (304, 305) des données de contrôle sur ledit canal de contrôle lors desdites occasions de surveillance en utilisant un schéma de mappage entre au moins un parmi lesdits un ou plusieurs états de transmission et lesdites occasions de surveillance dans ladite période de transmission.
